# EUROPEAN PATENT APPLICATION

(11) **EP 4 012 976 A1**
(43) Date of publication of application: **15.06.2022**
(21) Application number: 19944054.6
(22) Date of filing: 12.10.2019
(51) Int. Cl.: H04L 12/24

(54) **LAYER-TWO TUNNEL SWITCHING METHOD, SYSTEM, AND APPARATUS**

(30) Priority: 04.09.2019 CN 201910831978
(71) Applicant: Xiamen Wangsu Co., Ltd., Xiamen, Fujian 361000 (CN)
(72) Inventor: CHEN, Kailin, Xiamen, Fujian 361000 (CN); HUANG, Yun, Xiamen, Fujian 361000 (CN)
(74) Representative: De Arpe Tejero, Manuel
(86) International application number: PCT/CN2019/110773
(87) International publication number: WO 2021/042446

(57) **Abstract**

The present disclosure discloses a method, system, and device for switching a Layer 2 tunnel, wherein the method is applied to a Layer 2 private line system. The method includes: when the Layer 2 tunnel is switched from a first point of presence (POP) server to a second POP server, obtaining, by the first POP server, a current address information table, and constructing an address information packet; forwarding, by a switch, the address information packet to the second POP server; constructing, by the second POP server, spoofing packets according to an address information table carried in the address information packet; wherein each MAC address in the address information table is sequentially used as a source address of each of the spoofing packets; and receiving, by the switch, the spoofing packet sent from the second POP server, and updating a local address information table according to a port for receiving the spoofing packet and a source address in the spoofing packet. The technical solutions provided by the present disclosure can improve stability of a Layer 2 private line network.

## Description

### TECHNICAL FIELD

The present disclosure relates to the field of Internet technology, and more particularly, to a method, system and device for switching a Layer 2 tunnel.

### BACKGROUND

At present, the same enterprise may deploy data centers at different geographical locations, and different services provided by these data centers generally need to communicate with each other. Therefore, existing enterprises generally need to establish a Layer 2 private line network between different geographical locations.

In the Layer 2 private line network, both parties in communication may deploy switches and point of presence (POP) servers, and the POP servers may be connected through a Layer 2 tunnel to achieve two-way transmission of data packets. In the switches and the POP servers, a forwarding database (FDB) table may be maintained by means of an MAC address learning function, and ports configured to forward the data packets can be determined based on this FDB table.

In actual applications, one or more Layer 2 tunnels established between the POP servers may suddenly break down. In this case, the Layer 2 tunnel(s) may be switched, and the pop servers configured to receive the data packets may be changed. However, because the FDB table on the switch that forwards the data packets is not updated in time, the switch still sends the data packets to the original POP server according to the FDB table, which may lead to failure of regular transmission of the data packets, and thus having a negative effect on stability of the Layer 2 private line network.

### SUMMARY

An objective of the present disclosure is to provide a method, system and device for switching a Layer 2 tunnel, which can improve stability of a Layer 2 private line network.

To achieve the above objective, an aspect of the present disclosure provides a method for switching a Layer 2 tunnel, wherein the method is applied to a Layer 2 private line system. The method includes: when the Layer 2 tunnel is switched from a first point of presence (POP) server to a second POP server, obtaining, by the first POP server, a current address information table, constructing an address information packet based on the address information table, and sending the address information packet to a switch; forwarding, by the switch, the address information packet to the second POP server; receiving, by the second POP server, the address information packet forwarded by the switch, and constructing spoofing packets according to an address information table carried in the address information packet, wherein each media access control (MAC) address in the address information table is sequentially used as a source address of each of the spoofing packets; sending the spoofing packet to the switch; and receiving, by the switch, the spoofing packet sent from the second POP server, and updating a local address information table according to a port configured to receive the spoofing packet and a source address in the spoofing packet.

To achieve the above objective, another aspect of the present disclosure also provides a system for switching a Layer 2 tunnel. The system includes a switch and a first POP server and a second POP server connected to the switch. When the Layer 2 tunnel is switched from the first POP server to the second POP server: the first POP server is configured to obtain a current address information table, construct an address information packet based on the address information table, and send the address information packet to the switch. The second POP server is configured to receive the address information packet forwarded by the switch, and construct spoofing packets according to an address information table carried in the address information packet, wherein each MAC address in the address information table is sequentially used as a source address of each of the spoofing packets, and send the spoofing packet to the switch. The switch is configured to forward the address information packet to the second POP server, receive the spoofing packet sent from the second POP server, and update a local address information table according to a port configured to receive the spoofing packet and the source address of the spoofing packet.

To achieve the above objective, yet another aspect of the present disclosure also provides a method for switching a Layer 2 tunnel, wherein the method is applied to a POP server, the POP server is connected to a switch, and the switch is also connected to another POP server. The method includes: when the Layer 2 tunnel is switched from the POP server to the other POP server, obtaining a current address information table, and constructing an address information packet based on the address information table; sending the address information packet to the other POP server, wherein the address information packet is forwarded to the other POP server by means of the switch; and receiving a spoofing packet forwarded by the switch, and discarding the spoofing packet, wherein the spoofing packet is constructed by the other POP server based on the address information packet.

To achieve the above objective, still another aspect of the present disclosure also provides a POP server, which includes a processor and a memory. The memory is configured to store a computer program, and the computer program is executable by the processor, whereby the above method for switching a Layer 2 tunnel is implemented.

To achieve the above objective, still another aspect of the present disclosure also provides a method for switching a Layer 2 tunnel. The method is applied to a switch, and the switch is respectively connected to a first POP server and a second POP server. The method includes: when the Layer 2 tunnel is switched from the first POP server to the second POP server, receiving an address information packet sent from the first POP server, and forwarding the address information packet to the second POP server; and receiving a spoofing packet based on the address information packet from the second POP server, and updating a local address information table according to a port configured to receive the spoofing packet and a source address in the spoofing packet, such that after a data packet taking the source address as a destination address is received, the data packet is forwarded to the second POP server based on the updated address information table.

To achieve the above objective, still another aspect of the present disclosure also provides a switch including a processor and a memory. The memory is configured to store a computer program, and the computer program is executable by the processor, whereby the method for switching a Layer 2 tunnel is implemented.

As can be seen from the above technical solutions provided by the present disclosure, when the Layer 2 tunnel is switched from the first POP server to the second POP server, the first POP server may construct an address information packet according to the address information table currently maintained, and forward the address information packet to the second POP server by means of the switch. After receiving the address information packet, the second POP server may construct a spoofing packet according to contents of the address information table, wherein a source address in the spoofing packet may be the MAC address in the address information table. The second POP server may send the spoofing packet to the switch, and the switch may update a local address information table according to a port configured to receive the spoofing packet and the source address in the spoofing packet by means of its own MAC address learning function. Subsequently, after receiving a data packet taking the source address as a destination address, the switch may forward the data packet to the second POP server instead of the first POP server according to the updated address information table. The switch may actively update the local address information table when the Layer 2 tunnel is switched, such that the data packet is correctly forwarded to the POP server corresponding to the Layer 2 tunnel switched. In this way, it is ensured that the data packet can be transmitted through the Layer 2 tunnel switched, and stability of the Layer 2 private line network is improved.

### BRIEF DESCRIPTION OF THE DRAWINGS

To describe the technical solutions of embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic structural diagram of a Layer 2 private line network system according to an embodiment of the present disclosure;
FIG. 2 is a schematic diagram of steps of a Layer 2 tunnel switching method performed by a switch according to an embodiment of the present disclosure;
FIG. 3 is a schematic structural diagram of a switch according to an embodiment of the present disclosure; and
FIG. 4 is a schematic diagram of steps of a Layer 2 tunnel switching method performed by a POP server according to an embodiment of the present disclosure.

### DETAILED DESCRIPTION

To make the objectives, technical solutions and advantages of the present disclosure clearer, the embodiments of the present disclosure will be further described below in detail with reference to the accompanying drawings.

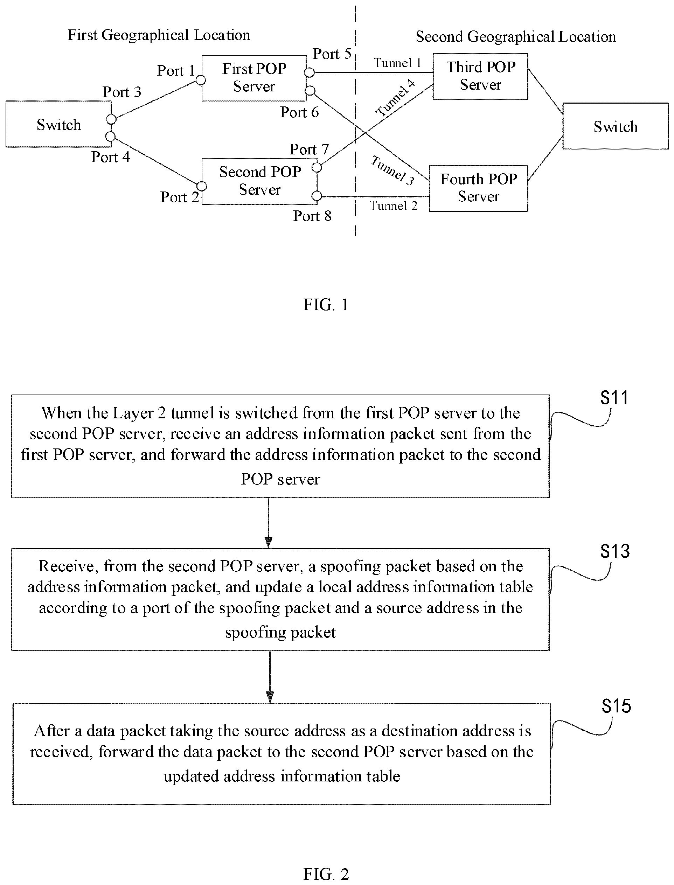

The method for switching a Layer 2 tunnel provided by the present disclosure may be applied to a Layer 2 private line system as shown in FIG. 1. The system may include a switch and a POP server. Generally, a Layer 2 private line network may be configured to transmit data packets between different communication devices. These communication devices may be distributed in different geographical locations, for example, in different cities, or geographical locations far apart from each other in the same city.

As shown in FIG. 1, the Layer 2 private line network may be a symmetrical structure. Switches and POP servers may be deployed at different geographical locations, and there may be at least one POP server at the same geographical location. For ease of description, the technical solutions of the present disclosure are illustrated merely by taking the switch on the left side in FIG. 1 and the first POP server and the second POP server as an example. In some embodiments of the present disclosure, it may be assumed that a port for connecting the switch to the first POP server is a port 3, and a port for connecting the switch to the second POP server is a port 4. Furthermore, the first POP server may be connected to the switch through a port 1, and the second POP server may be connected to the switch through a port 2. The first POP server may be connected to the Layer 2 tunnel through a port 5 and a port 6 respectively, and the second POP server may be connected to the Layer 2 tunnel through a port 7 and a port 8 respectively.

The method for switching a Layer 2 tunnel provided in one embodiment of the present disclosure may be applied to the above switch. Referring to FIG. 2, the method may include following steps.

S11: when the Layer 2 tunnel is switched from the first POP server to the second POP server, receiving an address information packet sent from the first POP server, and forwarding the address information packet to the second POP server.

In this embodiment, due to adverse effects of factors such as network quality and operating states of the POP servers, the Layer 2 tunnel originally responsible for data transmission may be out of order. In this case, according to a communication protocol adopted by the Layer 2 private line network, states of a plurality of tunnel ports of the POP servers may be automatically set, thereby implementing the switching of the Layer 2 tunnel. For example, the Layer 2 private line network may adopt a rapid spanning tree protocol (RSTP), which can ensure that only one Layer 2 tunnel between the POP servers as shown in FIG. 1 is in a connected state at the same moment and data transmission is carried out through this Layer 2 tunnel, and that the other three Layer 2 tunnels are all in a blocked state, and thus transmission of data packets cannot be carried out. For example, in FIG. 1, only a tunnel 1 is in the connected state, and data transmission is carried out through the tunnel 1. When the tunnel 1 is out of order, according to the RSTP, one Layer 2 tunnel may be selected from the remaining three tunnels (for example, a tunnel 2 may be selected), and this Layer 2 tunnel selected is used as the only tunnel that is in the connected state. In this way, the switching of the Layer 2 tunnel can be implemented.

In this embodiment, with the switching of the Layer 2 tunnel, the POP servers configured to transmit data packets may also be changed accordingly. For example, after being switched from the tunnel 1 to the tunnel 2, the first POP server originally responsible for communication will be unable to forward the data packet, instead it is switched to the second POP server to forward the data packet. In this case, it is necessary to prevent the switch from continuing to forward the data packet to the first POP server according to the original FDB table.

Specifically, when the Layer 2 tunnel for communication is switched from the first POP server to the second POP server, the first POP server may read a current address information table from a directory where the FDB table is stored. In this address information table, a correspondence relationship between an MAC address and a port number may be stored. In this way, after receiving a data packet uploaded from the Layer 2 tunnel, the first POP server may search for the destination address in the data packet from the address information table, to determine the port configured to forward the data packet.

In practical applications, the aforementioned address information table may be the FDB table, which generally may include a plurality of fields. For example, the FDB table may include a field configured for representing a virtual local area network (VLAN) identifier, a field configured for filling the MAC address, a field configured for representing a type of the MAC address, a field configured for representing the port number bound to MAC address, a field configured for representing a mode for processing the packet, and a field configured for representing a mode for configuring the MAC address, etc. In this way, each MAC address included in the FDB table may be recognized by analyzing contents in the FDB table.

In this embodiment, after the current address information table is obtained, the first POP server may construct an address information packet based on the address information table. Specifically, the first POP server may use the address information table as a body of the address information packet, and determine a value of an ethertype field in the address information packet and the destination address of the address information packet, such that a receiver may recognize the packet based on the value of the ethertype field.

In practical applications, the value of the ethertype field may be a custom value, and this value may be recognized by the switch and other POP servers. Preferably, the value of the ethertype field should not be a value that has been used in the network system, to avoid misrecognition of packets. For example, the value of the ethertype field in the address information packet may be Ox9288. The address information packet may be sent to the second POP server. Therefore, the destination address of the address information packet may be the MAC address of the port 2 through which the second POP server is connected to the switch.

After the address information packet is constructed, this packet may be sent from the port 1 by the first POP server, and the switch receives the address information packet through the port 3. Because the address information packet is a unicast packet, after receiving the address information packet, the switch may forward the address information packet to the port 2 of the second POP server only through the port 4, instead of broadcasting the address information packet to the other POP servers.

S13: receiving, from the second POP server, a spoofing packet based on the address information packet, and updating a local address information table according to a port of the spoofing packet and a source address in the spoofing packet.

In this embodiment, after receiving a packet forwarded by the switch, the second POP server may determine, according to an Ethernet type of the packet, whether this packet is an address information packet. When this packet is the address information packet, the second POP server may recognize the address information table carried therein. By analyzing the address information table, the second POP server may recognize each MAC address in the address information table.

For the switch, when the switch receives data packets taking these MAC addresses as destination addresses, the switch may forward these data packets to the first POP server through the port 3 according to the FDB table learned by the switch previously. After the Layer 2 tunnel is switched to the second POP server, a current mapping relationship of the switch needs to be changed.

In view of this, after recognizing each MAC address in the address information table, the second POP server may construct a plurality of spoofing packets based on these MAC addresses. In the spoofing packet, the MAC address analyzed from the address information table may be used as the source address, and the ethertype field and the destination address of the spoofing packet may be set.

Specifically, to enable the receiver to recognize the spoofing packet, Ethernet types different from other data packets may be set for the spoofing packet. In practical applications, an assigned value configured for representing a spoofing packet may be preset, such that the second POP server may fill the assigned value into the ethertype field of the spoofing packet. For example, the assigned value may be 0x9289. In addition, the spoofing packet may be sent to the first POP server. Therefore, the destination address in the spoofing packet may be the MAC address of the port 1 through which the first POP server is connected to the switch.

After each of the spoofing packets is constructed, the second POP server may send these spoofing packets to the switch through the port 2 in sequence. After receiving a spoofing packet from the port 4, the switch may recognize a source MAC address in this spoofing packet according to its own MAC address learning function, and may establish a mapping relationship between the source MAC address and the port 4 configured to receive the spoofing packet, to update a local FDB table. In this way, after receiving data packets sent from these source Mac addresses, the switch may send the data packets to the second POP server through the port 4 according to records of the FDB table.

The source MAC address in the spoofing packet actually is the MAC address in the address information table of the first POP server. Therefore, in the switch the source MAC address is originally mapped to the port 3 (that is, the port through which the switch is connected to the first POP server). The switch may map these source MAC addresses to the port 4 after learning the spoofing packet. In this way, when the switch is connected to the first POP server through the first port (the port 3), and connected to the second POP server through the second port (the port 4), after learning the spoofing packet, the switch may change a mapping relationship between the first port and each of the source addresses originally recorded in the local address information table to a mapping relationship between the second port and each of the source addresses, to implement an active update process of the local address information table.

In this embodiment, the spoofing packet by the second POP server may also be a unicast packet, and the destination address of the unicast packet directs to the first POP server. Therefore, after receiving the spoofing packet, the switch may learn the MAC address in the spoofing packet in one aspect, and may forward the spoofing packet to the first POP server in another aspect. After receiving a data packet from the switch, the first POP server may determine whether the ethertype field in the data packet is the above assigned value. When the determination result is YES, the first POP server may determine that the data packet is the spoofing packet by the second POP server. In this case, the first POP server may directly discard the spoofing packet.

S15: after a data packet taking the source address as a destination address is received, forwarding the data packet to the second POP server based on the updated address information table.

In this embodiment, after the local address information table is updated, when subsequently a data packet taking the source MAC address as the destination address is received, the switch may not forward the data packet to the first POP server. Instead, the switch may forward the data packet to the second POP server through the port 4 according to the updated address information table. In this way, the second POP server may forward the data packet through the switched Layer 2 tunnel.

As can be seen, after the Layer 2 tunnel is switched from the first POP server to the second POP server, the first POP server may actively provide its own address information table to the second POP server, such that subsequently the second POP server may construct a plurality of spoofing packets according to each MAC address in the address information table of the first POP server, and forward the plurality of spoofing packets through the switch. After forwarding these spoofing packets, the switch obtains a new mapping relationship between each MAC address and a port based on a self-learning mechanism, such that the local address information table of the switch may be updated to ensure that subsequent data packets can be forwarded to the second POP server by the switch, and further it is ensured that these data packets can be normally transmitted through the switched Layer 2 tunnel.

It is to be noted that the first POP server may construct the address information packet only for source address mapping information of a target port connected to the Layer 2 tunnel, and source address mapping information of other ports may be not necessarily included in the address information packet. In practical applications, when constructing the address information packet, the first POP server may recognize, from the address information table, the source address mapping information of the target port connected to the Layer 2 tunnel, and then construct the source address mapping information of the target port into the address information packet. For example, referring to FIG. 1, the first POP server may recognize source address mapping information of the port 5 and source address mapping information of the port 6 from the address information table, and use the source address mapping information of the port 5 and the source address mapping information of the port 6 as packet bodies to construct the address information packet. Subsequently, after receiving the address information packet forwarded by the switch, the second POP server may construct a corresponding spoofing packet based on the source address mapping information of the port 5 and the source address mapping information of the port 6.

In addition, in another embodiment, the first POP server may also use the source address mapping information of each port in the address information table as the packet body to construct the address information packet. However, when the second POP server constructs the spoofing packet, it is necessary to recognize, from the address information packet, source address mapping information of a target port connected to the Layer 2 tunnel on the first POP server, and the spoofing packet is constructed according to the recognized source address mapping information of the target port. Specifically, the first POP server may recognize, from its own address information table, the source address mapping information of each port, and construct the address information packet by using the recognized source address mapping information as a packet body. However, in the constructed address information packet, it is required to identify the port corresponding to the source address mapping information. Therefore, the first POP server may add a corresponding port identifier into the source address mapping information of each port, wherein the port identifier may be, for example, a port type or a port number. By recognizing the port type or the port number, the second POP server may recognize, from the address information packet, the source address mapping information of the target port through which the first POP server is connected to the Layer 2 tunnel, and construct the spoofing packet according to the source address mapping information of the target port.

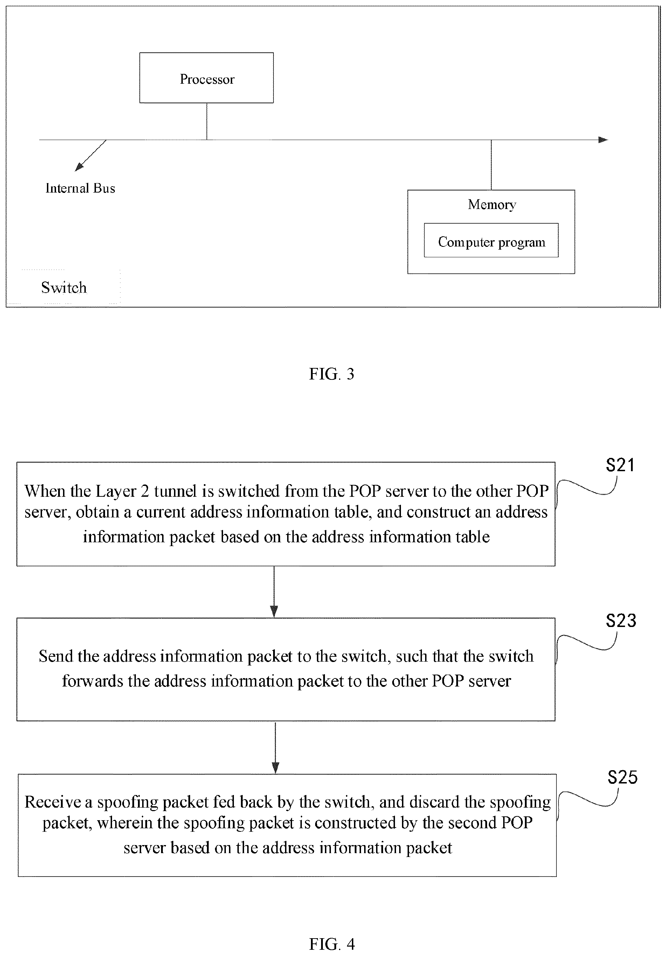

Referring to FIG. 3, the present disclosure also provides a switch, which includes a processor and a memory. The memory is configured to store a computer program, and the computer program is executable by the processor, whereby the method for switching a Layer 2 tunnel performed by the switch may be implemented.

The present disclosure also provides a method for switching a Layer 2 tunnel, wherein the method may be applied to a POP server, the POP server is connected to a switch, and the switch is also connected to another POP server. With reference to FIG. 4, the method may include following steps.

S21: when the Layer 2 tunnel is switched from the POP server to the other POP server, obtaining a current address information table, and constructing an address information packet based on the address information table.

S23: sending the address information packet to the switch, such that the switch forwards the address information packet to the other POP server.

S25: receiving a spoofing packet forwarded by the switch, and discarding the spoofing packet, wherein the spoofing packet is constructed by the other POP server based on the address information packet.

The address information packet constructed is a unicast packet, and the destination address in the address information packet directs to the other POP server.

In this embodiment, when constructing the address information packet, the POP server may use the address information table as the body of the address information packet, and determine a value of an ethertype field in the address information packet and the destination address of the address information packet, such that the receiver may recognize the packet based on the value of the ethertype field.

In practical applications, the value of the ethertype field may be a custom value, and this value may be recognized by the switch and other POP servers. Preferably, the value of the ethertype field should not be a value that has been used in the network system, to avoid misrecognition of packets. For example, the value of the ethertype field in the address information packet may be 0x9288. The address information packet may be sent to the second POP server. Therefore, the destination address of the address information packet may be the MAC address of the port 2 through which the second POP server is connected to the switch.

It is to be noted that when the Layer 2 tunnel is switched, the same POP server may need to recognize spoofing packets or address information packets at different stages. However, methods for processing the spoofing packets and the address information packets are different. The POP server may directly discard the spoofing packet. However, the POP server needs to extract the address information table in the address information packet to construct the spoofing packet. Therefore, it is important to correctly recognize the spoofing packets and the address information packets. In this embodiment, both the spoofing packet and the address information packet may include an ethertype field. The spoofing packet and the address information packet may be distinguished by filling different values in their ethertype fields. For example, the value filled in the ethertype field the spoofing packet may be 0x9289, and the value filled in the ethertype field of the address information packet may be 0x9288. Thus, the assigned value in the type field of the spoofing packet is different from the value in the type field of the address information packet, such that the spoofing packet and the address information packet may be correctly recognized based on different values.

In one embodiment, the spoofing packet is a unicast packet, and the destination address in the spoofing packet directs to the POP server, such that after receiving the spoofing packet, the switch forwards the spoofing packet to the POP server.

In one embodiment, the address information packet includes an address information table maintained by the POP server, and each MAC address in the address information table is sequentially used as a source address of the spoofing packet.

In one embodiment, the receiving a spoofing packet fed back by the switch and discarding the spoofing packet include:

when receiving a data packet from the switch, determining whether a type field in the data packet is an assigned value, and when the determination result is YES, determining that the data packet is a spoofing packet by the other POP server, and discarding the spoofing packet.

In one embodiment, the method also includes:
when the Layer 2 tunnel is switched from the other POP server to the POP server, receiving the address information packet of the other POP server forwarded by the switch;
recognizing an address information table carried in the address information packet of the other POP server, and constructing the spoofing packet based on the address information table recognized, wherein each MAC address in the address information table recognized is successively used as a source address of each of the spoofing packets; and
sending the spoofing packet to the switch, such that the switch updates a local address information table of the switch according to a port configured to receive the spoofing packet and the source address of the spoofing packet.

In one embodiment, constructing the spoofing packet based on the address information table recognized includes:
determining an assigned value configured for representing the spoofing packet, and filling the assigned value into a type field of the spoofing packet; and
taking an MAC address in the address information table as the source address of the spoofing packet, and taking an MAC address of the other POP server as a destination address of the spoofing packet.

The present disclosure also provides a POP server, which includes a processor and a memory. The memory is configured to store a computer program, and the computer program is executable by the processor, whereby the above method for switching a Layer 2 tunnel performed by the POP server may be implemented.

The present disclosure also provides a system for switching a Layer 2 tunnel. The system includes a switch and a first POP server and a second POP server connected to the switch. When the Layer 2 tunnel is switched from the first POP server to the second POP server:
the first POP server is configured to obtain a current address information table, construct an address information packet based on the address information table, and send the address information packet to the switch;
the second POP server is configured to receive the address information packet forwarded by the switch, and construct spoofing packets according to an address information table carried in the address information packet, wherein each MAC address in the address information table is sequentially used as a source address of each of the spoofing packets; and send the spoofing packet to the switch; and
the switch is configured to forward the address information packet to the second POP server, receive the spoofing packet sent from the second POP server, and update a local address information table according to a port configured to receive the spoofing packet and the source address of the spoofing packet.

In one embodiment, the switch is also configured to forward the spoofing packet to the first POP server. The first POP server is also configured to receive the spoofing packet fed back by the switch, and discard the spoofing packet.

As can be seen from the above technical solutions provided by the present disclosure, when the Layer 2 tunnel is switched from the first POP server to the second POP server, the first POP server may construct an address information packet according to the address information table currently maintained, and forward the address information packet to the second POP server by means of the switch. After receiving the address information packet, the second POP server may construct a spoofing packet according to contents of the address information table, wherein a source address in the spoofing packet may be the MAC address in the address information table. The second POP server may send the spoofing packet to the switch, and the switch may update a local address information table according to a port configured to receive the spoofing packet and the source address in the spoofing packet by means of its own MAC address learning function. Subsequently, after receiving a data packet taking the source address as a destination address, the switch may forward the data packet to the second POP server instead of the first POP server according to the updated address information table. The switch may actively update the local address information table when the Layer 2 tunnel is switched, such that the data packet is correctly forwarded to the POP server corresponding to the Layer 2 tunnel switched. In this way, it is ensured that the data packet can be transmitted through the Layer 2 tunnel switched, and stability of the Layer 2 private line network is improved.

The various embodiments in this specification are described in a progressive manner, and the same or similar parts between the various embodiments can be referred to each other, and each embodiment focuses on the differences from other embodiments. In particular, for the system and device embodiments, both can be explained with reference to the introduction of the foregoing method embodiments.

It can be known from the foregoing implementations, those skilled in the art may clearly know that various implementations can be implemented by feat of software and necessary general hardware platform, or of course by means of hardware. Based on such an understanding, the foregoing technical solutions in essence or that part of contribution to the prior art may be embodied in the form of software products, which may be stored in computer-readable storage media, such as ROM/RAM, diskettes or optical disks and the like, including some instructions such that it is possible to execute embodiments or methods as recited in some parts of embodiments by a computer device (personal computers or servers, or network device, etc.).

The foregoing descriptions are merely preferred embodiments of the present disclosure, and are not intended to limit the present disclosure. Any modification, equivalent replacement and improvement made within the spirit and principle of the present disclosure shall fall into the protection scope of the present disclosure.

## Claims

1. A method for switching a Layer 2 tunnel, the method being applied to a Layer 2 private line system, and the method comprising: when the Layer 2 tunnel is switched from a first point of presence (POP) server to a second POP server:
obtaining, by the first POP server, a current address information table, constructing an address information packet based on the address information table, and sending the address information packet to a switch;
forwarding, by the switch, the address information packet to the second POP server;
receiving, by the second POP server, the address information packet forwarded by the switch, and constructing spoofing packets according to an address information table carried in the address information packet, wherein each media access control (MAC) address in the address information table is sequentially used as a source address of each of the spoofing packets; and sending the spoofing packet to the switch; and
receiving, by the switch, the spoofing packet sent from the second POP server, and updating a local address information table according to a port configured to receive the spoofing packet and a source address in the spoofing packet.

2. The method according to claim 1, wherein the address information packet is a unicast packet, and a destination address in the address information packet directs to the second POP server; and the spoofing packet is a unicast packet, and a destination address in the spoofing packet directs to the first POP server.

3. The method according to claim 1 or 2, wherein the switch is connected to the first POP server through a first port, and is connected to the second POP server through a second port; and the updating a local address information table comprises:
changing, by the switch, a mapping relationship between the first port and each of the source addresses originally recorded in the local address information table to a mapping relationship between the second port and each of the source addresses.

4. The method according to claim 1 or 2, wherein the constructing an address information packet based on the address information table comprises:
recognizing, by the first POP server, source address mapping information of a target port connected to the Layer 2 tunnel from the address information table, and constructing the source address mapping information of the target port into the address information packet;
or
recognizing, by the first POP server, source address mapping information of each port from the address information table, constructing the source address mapping information into an address information packet, and adding a corresponding port identifier into the source address mapping information of each port, such that the second POP server recognizes, from the address information packet, source address mapping information of a target port of the first POP server connected to the Layer 2 tunnel according to the port identifier added, and constructs a spoofing packet according to the source address mapping information of the target port.

5. The method according to claim 1, further comprising:
receiving, by the first POP server, a spoofing packet fed back by the switch, and discarding the spoofing packet.

6. The method according to claim 1, wherein the constructing, by the second POP server, spoofing packets according to an address information table carried in the address information packet comprises:
determining, by the second POP server, an assigned value configured for representing a spoofing packet, and filling the assigned value into a type field of the spoofing packet; and
taking an MAC address in the address information table as the source address of the spoofing packet, and taking an MAC address of the second POP server as a destination address of the spoofing packet, wherein the assigned value in the type field of the spoofing packet is different from a value in a type field of the address information packet.

7. A system for switching a Layer 2 tunnel, the system comprising a switch and a first POP server and a second POP server connected to the switch, wherein when the Layer 2 tunnel is switched from the first POP server to the second POP server:
the first POP server is configured to obtain a current address information table, construct an address information packet based on the address information table, and send the address information packet to the switch;
the second POP server is configured to receive the address information packet forwarded by the switch, and construct spoofing packets according to an address information table carried in the address information packet, wherein each MAC address in the address information table is sequentially used as a source address of each of the spoofing packets; and send the spoofing packet to the switch; and
the switch is configured to forward the address information packet to the second POP server, receive the spoofing packet sent from the second POP server, and update a local address information table according to a port configured to receive the spoofing packet and the source address of the spoofing packet.

8. A method for switching a Layer 2 tunnel, wherein the method is applied to a POP server, the POP server is connected to a switch, and the switch is further connected to another POP server; the method comprising:
when the Layer 2 tunnel is switched from the POP server to the other POP server, obtaining a current address information table, and constructing an address information packet based on the address information table;
sending the address information packet to the other POP server, wherein the address information packet is forwarded to the other POP server by means of the switch; and
receiving a spoofing packet forwarded by the switch, and discarding the spoofing packet, wherein the spoofing packet is constructed by the other POP server based on the address information packet.

9. The method according to claim 8, wherein the address information packet constructed is a unicast packet, and a destination address in the address information packet directs to the other POP server; and the spoofing packet is a unicast packet, and a destination address in the spoofing packet directs to the POP server, such that the switch forwards the spoofing packet to the POP server after the spoofing packet is received.

10. The method according to claim 8, wherein the address information packet comprises an address information table maintained by the POP server, and each MAC address in the address information table is successively used as a source address of the spoofing packet.

11. The method according to claim 8, wherein the receiving a spoofing packet fed back by the switch and discarding the spoofing packet comprise:
when receiving a data packet from the switch, determining whether a type field in the data packet is an assigned value, and when the determination result is YES, determining that the data packet is a spoofing packet by the other POP server, and discarding the spoofing packet.

12. The method according to claim 8, further comprising:
when the Layer 2 tunnel is switched from the other POP server to the POP server, receiving the address information packet of the other POP server forwarded by the switch;
recognizing an address information table carried in the address information packet of the other POP server, and constructing the spoofing packet based on the address information table recognized, wherein each MAC address in the address information table recognized is successively used as a source address of each of the spoofing packets; and
sending the spoofing packet to the switch, such that the switch updates a local address information table of the switch according to a port configured to receive the spoofing packet and the source address of the spoofing packet.

13. The method according to claim 12, wherein the constructing the spoofing packet based on the address information table recognized comprises:
determining an assigned value configured for representing the spoofing packet, and filling the assigned value into a type field of the spoofing packet; and
taking the MAC address in the address information table as the source address of the spoofing packet, and taking an MAC address of the other POP server as a destination address of the spoofing packet, wherein the assigned value in the type field of the spoofing packet is different from a value in a type field of the address information packet.

14. The method according to claim 8, wherein the constructing an address information packet based on the address information table comprises:
recognizing, from the address information table, source address mapping information of a target port connected to the Layer 2 tunnel, and constructing the source address mapping information of the target port into the address information packet;
or
recognizing source address mapping information of each port from the address information table, constructing the source address mapping information into an address information packet, and adding a corresponding port identifier into the source address mapping information of each port, such that the other POP server recognizes, from the address information packet, source address mapping information of a target port of the POP server connected to the Layer 2 tunnel according to the port identifier added, and constructs a spoofing packet according to the source address mapping information of the target port.

15. A POP server, comprising a processor and a memory, wherein the memory is configured to store a computer program, and the computer program is executable by the processor, whereby the method according to any one of claims 8 to 14 is implemented.

16. A method for switching a Layer 2 tunnel, wherein the method is applied to a switch, and the switch is respectively connected to a first POP server and a second POP server; the method comprising:
when the Layer 2 tunnel is switched from the first POP server to the second POP server, receiving an address information packet sent from the first POP server, and forwarding the address information packet to the second POP server; and
receiving a spoofing packet based on the address information packet from the second POP server, and updating a local address information table according to a port configured to receive the spoofing packet and a source address in the spoofing packet, such that after a data packet taking the source address as a destination address is received, the data packet is forwarded to the second POP server based on the updated address information table.

17. The method according to claim 16, wherein the address information packet is a unicast packet, and a destination address in the address information packet directs to the second POP server; and the spoofing packet is a unicast packet, and a destination address in the spoofing packet directs to the first POP server, such that the switch forwards the spoofing packet to the first POP server after the spoofing packet is received.

18. The method according to claim 16, wherein the address information packet sent from the first POP server comprises an address information table maintained by the first POP server, and each MAC address in the address information table is successively used as the source address of the spoofing packet.

19. The method according to claim 16 or 18, wherein the switch is connected to the first POP server through a first port, and is connected to the second POP server through a second port; and the updating a local address information table comprises:
changing a mapping relationship between the first port and each of the source addresses originally recorded in the local address information table to a mapping relationship between the second port and each of the source addresses.

20. A switch, comprising a processor and a memory, wherein the memory is configured to store a computer program, and the computer program is executable by the processor, whereby the method according to any one of claims 16 to 19 is implemented.
